# DEMANDE DE BREVET EUROPEEN

(11) **EP 4 420 823 A1**
(43) Date de publication de la demande: **28.08.2024**
(21) Numéro de dépôt: 24158527.2
(22) Date de dépôt: 20.02.2024
(51) Int. Cl.: B23P 19/06, B25B 21/00, B25F 5/00, E01B 29/28

(54) **TIREFONNEUSE COMPRENANT UN GROUPE D'ENTRAÎNEMENT À POSITION ADAPTÉE**

(30) Priorité: 23.02.2023 FR 2301686
(71) Demandeur: Geismar, 92200 Neuilly sur Seine (FR)
(72) Inventeur: BENDRISS-TORRES, Vincent, 38630 Les Avenières (FR); GASPARD, Olivier, 38490 SAINT ONDRAS (FR); TABTE, Ahmid, 69500 BRON (FR)
(74) Mandataire: Germain Maureau

(57) **Abrégé**

La tirefonneuse (100) comprend : un embout (35) apte à être mis en rotation en vue de visser ou de dévisser une attache (101) de voie (102) ferrée, un groupe (1) d'entraînement comprenant un arbre d'entraînement agencé en sortie du groupe (1) d'entraînement, une transmission reliant le groupe (1) d'entraînement à l'embout (35) et configurée pour propager, dans une configuration opérationnelle de la tirefonneuse (100), un mouvement de rotation de l'arbre d'entraînement afin d'entraîner l'embout (35) en rotation. La transmission comprenant successivement depuis le groupe (1) d'entraînement : un mécanisme (7) de transmission, et un arbre mené couplé à l'arbre d'entraînement par l'intermédiaire du mécanisme (7) de transmission. L'arbre d'entraînement étant décalé par rapport à l'arbre mené.

## Description

### Domaine technique de l'invention

La présente invention concerne une tirefonneuse, notamment destinée aux chantiers ferroviaires. En particulier, la tirefonneuse est conçue pour sélectivement visser ou dévisser les attaches qui fixent les rails sur les traverses de voie ferrée.

### Etat de la technique antérieure

Dans le domaine des chantiers ferroviaires, il est connu d'utiliser une tirefonneuse pour visser ou dévisser des attaches. La tirefonneuse comprend un moteur relié mécaniquement à une tête de tirefonnage munie d'un embout rotatif pour le vissage ou dévissage souhaité.

Le couplage mécanique entre le moteur et la tête de tirefonnage est généralement réalisé à l'aide d'un système de transmission agencé entre le moteur et la tête de tirefonnage selon une direction longitudinale de la tirefonneuse qui comprend alors successivement, selon cette direction longitudinale, le moteur, le système de transmission et la tête de tirefonnage. Ce système de transmission peut être vu comme l'ensemble des composants mécaniques par lesquels se propage un mouvement issu d'un arbre de sortie du moteur jusqu'à la tête de tirefonnage.

Cette structure en longueur de la tirefonneuse n'est pas adaptée dans tous les cas de figures.

### Objet de l'invention

La présente invention a pour but de prévoir une structure de tirefonneuse permettant d'adapter sa fabrication pour différents besoins.

A cet effet, l'invention est relative à une tirefonneuse comprenant :
- un embout apte à être mis en rotation en vue de visser ou de dévisser une attache de voie ferrée ;
- un groupe d'entraînement comprenant un arbre d'entraînement agencé en sortie du groupe d'entraînement ;
- une transmission reliant le groupe d'entraînement à l'embout et configurée pour propager, dans une configuration opérationnelle de la tirefonneuse, un mouvement de rotation de l'arbre d'entraînement afin d'entraîner l'embout en rotation ;

la transmission comprenant successivement depuis le groupe d'entraînement :
   - un mécanisme de transmission ;
   - un arbre mené couplé à l'arbre d'entraînement par l'intermédiaire du mécanisme de transmission ;
l'arbre d'entraînement étant décalé par rapport à l'arbre mené.

Le décalage de l'arbre mené par rapport à l'arbre d'entraînement en combinaison au mécanisme de transmission, qui permet le couplage en s' adaptant au décalage, présente l'avantage d'autoriser une grande latitude de positionnement du groupe d'entraînement et notamment d'un moteur que le groupe d'entraînement comprend. Cela permet de diminuer l'encombrement et de rendre la tirefonneuse plus compacte, ou de s'adapter à une configuration particulière du groupe d'entraînement, ou à des besoins d'équilibrages spécifiques de la tirefonneuse. En outre, la latitude de positionnement permet, le cas échéant, de rendre le groupe d'entraînement plus accessible à un opérateur, notamment pendant les interventions d'entretien et maintenance lors de l'utilisation de la tirefonneuse si le groupe d'entraînement le requiert, par exemple lorsque le moteur du groupe d'entraînement est un moteur thermique.

La tirefonneuse peut en outre comprendre une ou plusieurs des caractéristiques suivantes.

Selon une caractéristique de la tirefonneuse, l'arbre d'entraînement comprend une portion qui s'étend dans une première direction selon un premier sens en sortie du groupe d'entraînement vers le mécanisme de transmission et l'arbre mené comprend une portion qui s'étend dans une deuxième direction selon un deuxième sens orienté vers l'embout le long d'un chemin de propagation du mouvement de rotation de l'arbre d'entraînement au sein de la transmission, le premier sens et le deuxième sens étant opposés.

Cet agencement de portions de l'arbre d'entraînement et de l'arbre mené selon deux directions de sens opposés permet de réduire l'encombrement, de rendre la tirefonneuse plus compacte et de faciliter l'accès au groupe d'entraînement par l'opérateur.

Selon une caractéristique de la tirefonneuse, le groupe d'entraînement est agencé à l'aplomb d'au moins une partie de l'arbre mené.

Cet agencement du groupe d'entraînement par rapport à l'arbre mené permet de limiter l'encombrement longitudinal de la tirefonneuse.

Selon une caractéristique de la tirefonneuse, le groupe d'entraînement, le mécanisme de transmission et l'arbre mené sont agencés selon une architecture en C.

Cette architecture présente des avantages par rapport à l'encombrement de la tirefonneuse et au rapprochement du groupe d'entraînement de l'opérateur qui peut plus aisément interagir avec le groupe d'entraînement si besoin.

Selon une caractéristique de la tirefonneuse, l'axe de l'arbre d'entraînement et l'axe de l'arbre mené sont sensiblement parallèles entre eux et, lorsque la tirefonneuse est dans la configuration opérationnelle :
- l'axe de l'arbre d'entraînement et l'axe de l'arbre mené présentent entre eux un décalage de niveau selon une direction verticale compris entre 10 mm et 400 mm, et préférentiellement entre 10 mm et 220 mm, et un décalage selon une direction latérale strictement supérieur à 0 mm et inférieur ou égal à 400 mm, et préférentiellement inférieur ou égal à 220 mm ; ou
- l'axe de l'arbre d'entraînement et l'axe de l'arbre mené présentent entre eux un décalage de niveau selon une direction verticale compris entre 10 mm et 400 mm, et l'un de l'arbre d'entraînement et de l'arbre mené est agencé à l'aplomb de l'autre de l'arbre d'entraînement et de l'arbre mené.

Cela permet d'agencer de manière idoine le centre de gravité de la tirefonneuse et d'assurer la compacité et l'équilibrage de la tirefonneuse.

Selon une caractéristique de la tirefonneuse, le groupe d'entraînement comprend un carter traversé par l'arbre d'entraînement :
- le carter et le mécanisme de transmission sont en contact ; ou
- selon une direction sensiblement parallèle à l'axe de l'arbre d'entraînement, le carter et le mécanisme de transmission sont séparés d'une distance strictement supérieure à 0 mm et inférieure ou égale à 1000 mm, et préférentiellement inférieure ou égale à 500 mm.

Cela permet avantageusement d'indexer la position longitudinale du groupe d'entraînement selon la longueur de la tirefonneuse, notamment pour faciliter son basculement pour coopérer avec une attache correspondante et/ou faciliter les interactions d'un opérateur avec le groupe d'entraînement.

Selon une caractéristique de la tirefonneuse, la transmission comprend un mécanisme de réduction agencé entre l'arbre mené et l'embout.

Le mécanisme de réduction permet de présenter une réduction, notamment mécanique, du mouvement de rotation entre l'arbre mené et l'embout en vue de limiter la vitesse de rotation de l'embout.

Selon une caractéristique de la tirefonneuse, dans la configuration opérationnelle de la tirefonneuse, le groupe d'entraînement est positionné à un niveau de hauteur plus élevé que le niveau de hauteur du mécanisme de réduction par rapport au sol.

Ce positionnement du groupe d'entraînement par rapport au mécanisme de réduction permet de positionner et d'orienter le groupe d'entraînement pour le rendre plus accessible à l'opérateur.

Selon une caractéristique de la tirefonneuse, le mécanisme de réduction est une boîte à une unique vitesse.

Ce mode de réalisation avec la boîte à une unique vitesse permet de simplifier la conception mécanique de la tirefonneuse, de réduire le coût et de simplifier l'utilisation, notamment l'amélioration du confort d'usage.

Selon une caractéristique de la tirefonneuse, le mécanisme de réduction est une boîte de vitesses ayant au moins deux vitesses présentant des rapports de transmission différents.

Ce mode de réalisation avec une boîte de vitesses comprenant deux rapports de transmission permet d'utiliser un moteur de plus faible puissance. Cela présente des avantages par rapport aux coûts de la motorisation et de la consommation énergétique et permet d'alléger la tirefonneuse (en améliorant ainsi son ergonomie d'utilisation du fait de son allègement).

Selon une caractéristique de la tirefonneuse, la tirefonneuse comprend un carter et la transmission comprend :
- un renvoi d'angle agencé dans le carter ;
- un arbre reliant le renvoi d'angle à l'embout agencé hors du carter.

Le renvoi d'angle permet de propager le mouvement de rotation à l'embout orienté vers le sol, le cas échéant tout en assurant une réduction du mouvement.

Selon une caractéristique de la tirefonneuse, le mécanisme de réduction est :
- situé dans le carter ;
- fixé sur le carter ; ou
- situé à distance du carter de sorte qu'au moins un arbre de transmission relie le mécanisme de réduction au renvoi d'angle.

Ceci permet un large choix quant à la conception de la tirefonneuse. En intégrant le mécanisme de réduction dans le carter, cela permet de réduire les coûts en limitant le nombre de boîtiers de protection (le carter faisant office de boitier de protection peut loger plusieurs fonctions), de réduire le poids, de simplifier la maintenance, et d'avoir un meilleur rendement grâce à la diminution du nombre de composants, notamment mécaniques, en mouvement.

Selon une caractéristique de la tirefonneuse, la tirefonneuse comprend un volant d'inertie pour transmettre temporairement un couple à l'embout ayant une valeur supérieure à la valeur d'un couple délivré par l'arbre d'entraînement.

Le volant d'inertie ne permet pas de répondre à une demande continue de couple mais permet d'obtenir un couple suffisant temporaire, lié à son inertie, pour passer un point dur uniquement notamment à une vitesse prédéterminée de rotation de l'embout.

Selon une caractéristique de la tirefonneuse, le mécanisme de transmission comprend une transmission à variation continue.

Une transmission à variation continue présente l'avantage de varier continûment le rapport de démultiplication de l'arbre d'entraînement à l'arbre mené couplé à l'embout, d'où il résulte une adaptation automatique de la vitesse de rotation de l'embout en fonction de la résistance qu'oppose l'attache à l'embout au cours du vissage ou du dévissage de l'attache, facilitant ainsi le passage d'un point dur (lié au couple résistant provoqué par la coopération de l'embout avec l'attache et se propageant de l'embout à l'arbre mené).

### Brève description des dessins

L'invention sera mieux comprise à la lecture de la description détaillée qui suit, donnée uniquement à titre d'exemple non limitatif et faite en se référant aux dessins annexés et listés ci-dessous.
La figure 1 représente schématiquement une vue en perspective de la tirefonneuse de la figure 1 selon un mode de réalisation particulier.
La figure 2 représente schématiquement la tirefonneuse de la figure 1 équipée d'un chariot et agencée sur une voie ferrée et notamment dans une configuration opérationnelle de la tirefonneuse.
La figure 3 représente une vue latérale de la tirefonneuse de la figure 1.
La figure 4 représente une vue en coupe de la tirefonneuse pratiquée parallèlement au plan de la figure 3 de sorte que le plan de coupe passe par un arbre mené de la tirefonneuse.
La figure 5 représente une vue partielle de la tirefonneuse de la figure 3 où la tirefonneuse comprend une transmission à variation continue, ladite vue montrant de manière éclatée le montage de la transmission à variation continue au sein de la tirefonneuse avec une courroie de la transmission à variation continue retirée afin de montrer de manière plus claire des composants de la transmission à variation continue.
La figure 6 représente une vue de côté de la tirefonneuse de la figure 1 montrant un positionnement paramétrique de l'arbre d'entraînement et l'arbre mené.
La figure 7 représente un schéma-bloc décrivant schématiquement une architecture en C de la tirefonneuse selon un mode de réalisation particulier.
La figure 8 représente un schéma-bloc décrivant schématiquement une architecture en Z de la tirefonneuse selon un mode de réalisation particulier.
La figure 9 représente un schéma-bloc décrivant schématiquement une architecture en L de la tirefonneuse selon un mode de réalisation particulier.
La figure 10 représente un schéma-bloc décrivant schématiquement une architecture de la tirefonneuse équipée d'un volant d'inertie selon un mode de réalisation particulier.

Sur ces figures, les mêmes références sont utilisées pour désigner les mêmes éléments. Les éléments représentés sur les différentes figures ne sont pas nécessairement réalisés à l'échelle afin de faciliter la compréhension des figures.

### Description détaillée

Dans la présente invention, deux éléments sont « couplés » ou « liés », par exemple mécaniquement, lorsqu'ils sont associés l'un à l'autre par une liaison, par exemple mécanique, faisant en sorte que le comportement de l'un des deux éléments affecte celui de l'autre élément. Cette liaison peut être directe lorsque les deux éléments considérés sont en contact, ou indirecte lorsque les deux éléments considérés sont liés via un ou plusieurs éléments intermédiaires comme des arbres d'entraînement, des mécanismes d'entraînement, ou autre.

Dans la présente description, par « sensiblement parallèle » il est entendu parallèle ou parallèle à plus ou moins 10 degrés.

Par « compris entre deux valeurs », il est entendu dans la présente description que ces deux valeurs forment les bornes d'une plage correspondante pour laquelle les deux valeurs sont incluses.

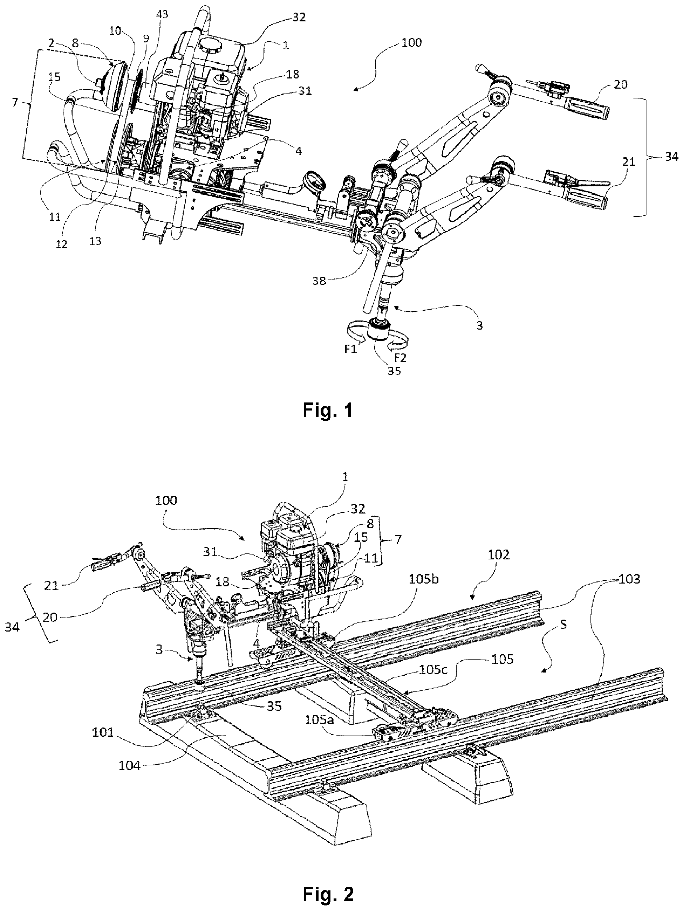

Une tirefonneuse 100 selon l'invention, dont une réalisation particulière est illustrée à titre d'exemple sur les figures 1 à 6, comprend un embout 35 apte à être mis en rotation en vue de visser ou de dévisser une attache 101 de voie 102 ferrée, un groupe 1 d' entraînement comprenant un arbre 2 d' entraînement agencé en sortie du groupe 1 d'entraînement et une transmission reliant, par exemple mécaniquement, le groupe 1 d'entraînement à l'embout 35 pour propager, dans une configuration opérationnelle de la tirefonneuse 100, un mouvement de rotation de l'arbre 2 d'entraînement afin d'entraîner l'embout 35 en rotation. Ainsi, la transmission est notamment liée, d'une part, au groupe 1 d'entraînement et, d'autre part, à l'embout 35. La tirefonneuse 100 peut comprendre une tête 3 de tirefonnage qui comprend l'embout 35.

L'attache 101 peut être tout type d'élément de montage utilisé pour la fixation d'un rail 103 de la voie 102 ferrée, comme par exemple un tirefond ou une attache à filet, à une traverse 104 de la voie 102 ferrée, comme il est possible de le voir sur la figure 2.

L'embout 35 peut être une clé de serrage, par exemple hexagonale, présentant une forme adaptée pour coopérer avec une tête de l'attache 101.

Le groupe 1 d'entraînement a notamment pour rôle de générer une énergie mécanique qu'il transmet vers l'extérieur au moyen de l'arbre 2 d'entraînement, de préférence rotatif. La tirefonneuse 100 peut alors être configurée pour exploiter, dans la configuration opérationnelle décrite plus en détail ci-après l'énergie mécanique issue de l'arbre 2 d'entraînement dans le but d'assurer la rotation idoine de l'embout 35 pour le vissage ou le dévissage recherché de l'attache 101.

La transmission, reliant le groupe 1 d'entraînement à l'embout 35, comprend successivement, depuis le groupe 1 d'entraînement, un mécanisme 7 de transmission et un arbre 5 mené couplé, par exemple mécaniquement, à l'arbre 2 d'entraînement par l'intermédiaire du mécanisme 7 de transmission. L'arbre 2 d'entraînement est décalé par rapport à l'arbre 5 mené.

Par « décalé » en parlant de l'arbre 2 d'entraînement et de l'arbre 5 mené, il est entendu que l'arbre 2 d'entraînement et l'arbre 5 mené ne sont pas alignés l'un par rapport à l'autre ou coïncidant/coaxiaux.

Par mécanisme 7 de transmission, il est entendu que le mouvement généré par le groupe 1 d'entraînement est notamment transmis à un moment donné via un ou plusieurs organes comme par exemple une courroie, un engrenage ou autre. Le mécanisme 7 de transmission peut être en tout ou partie mécanique ou en tout ou partie hydraulique. Un avantage du mécanisme 7 de transmission mécanique est qu'il est plus aisé à entretenir et moins coûteux qu'une transmission hydraulique par exemple (couplage à l'aide d'un fluide).

Le groupe 1 d'entraînement peut comprendre un moteur 18 dont l'arbre moteur forme l'arbre 2 d'entraînement évoqué ci-avant ou peut comprendre le moteur 18 et un mécanisme de réduction (non représenté) couplé, par exemple mécaniquement, à l'arbre moteur du moteur 18 afin de présenter l'arbre 2 d'entraînement avec une réduction prédéfinie de rotation, fonction du mécanisme de réduction, dans la configuration opérationnelle de la tirefonneuse 100.

Le moteur 18 peut être un moteur électrique, thermique, hydraulique ou à hydrogène.

Le décalage de l'arbre 5 mené par rapport à l'arbre 2 d'entraînement en combinaison au mécanisme 7 de transmission, qui permet le couplage de l'arbre 2 d'entraînement à l'arbre 5 mené en s'adaptant au décalage, présente l'avantage d'autoriser une grande latitude de positionnement du groupe 1 d'entraînement et notamment du moteur 18 du groupe 1 d'entraînement. Cela permet de diminuer l'encombrement de la tirefonneuse 100 afin de la rendre plus compacte. En outre, la latitude de positionnement permet de rendre le groupe 1 d'entraînement plus accessible à l'opérateur, notamment pendant les interventions d'entretien et de maintenance si le groupe 1 d'entraînement le requiert, par exemple lorsque le moteur 18 est un moteur thermique.

Par exemple, la tirefonneuse 100, telle qu'elle est illustrée sur la figure 2, est agencée sur la voie 102 ferrée pour se déplacer le long de cette dernière afin de la positionner de manière idoine pour procéder au vissage ou au dévissage d'une attache 101 correspondante. A cet effet, la tirefonneuse 100 peut comprendre un chariot 105 de roulement configuré pour rouler sur la voie 102 ferrée et configuré pour autoriser un basculement d'une partie de la tirefonneuse 100 dans le but de la positionner pour permettre une coopération de l'embout 35 avec une attache 101 à visser ou à dévisser correspondante et/ou de la libérer de l'attache 101 une fois cette attache 101 vissée. Le chariot 105 de roulement peut comprendre des parties 105a, 105b chacune munie de roues et positionnée pour rouler sur des rails 103 de la voie 102 ferrée. Les parties 105a, 105b du chariot peuvent être reliées entre elles par une traverse 105c du chariot 105 sur laquelle ladite partie de la tirefonneuse 100 est montée à basculement et à rotation orthogonalement à l'axe de basculement pour permettre de visser ou dévisser des attaches 101 de part et d'autre d'un même rail 103.

En particulier, et dans le but de faciliter sa manipulation, la tirefonneuse 100 peut comprendre un poste 34 de commande comprenant deux bras de guidage équipés chacun d'une poignée 20, 21 permettant la manipulation de la tirefonneuse 100 par un opérateur, et notamment permettant de guider le basculement évoqué ci-avant.

Notamment, dans la configuration opérationnelle de la tirefonneuse 100, cette dernière est positionnée de sorte que l'embout 35 soit orienté vers le sol S (figure 2), notamment de sorte à autoriser sa coopération avec une attache 101 correspondante.

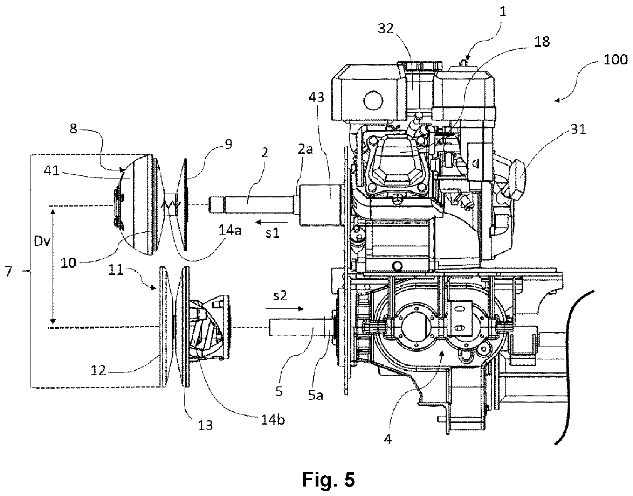

Selon un mode de réalisation, comme il est possible de le voir sur la figure 5, l'arbre 2 d'entraînement comprend une portion 2a qui s'étend dans une première direction selon un premier sens s1 en sortie du groupe 1 d'entraînement vers le mécanisme 7 de transmission et dans ce cas l'arbre 5 mené comprend une portion 5a qui s'étend dans une deuxième direction selon un deuxième sens s2 orienté vers l'embout 35 le long d'un chemin de propagation du mouvement de rotation de l'arbre 2 d'entraînement au sein de la transmission, le premier sens s1 et le deuxième sens s2 étant opposés.

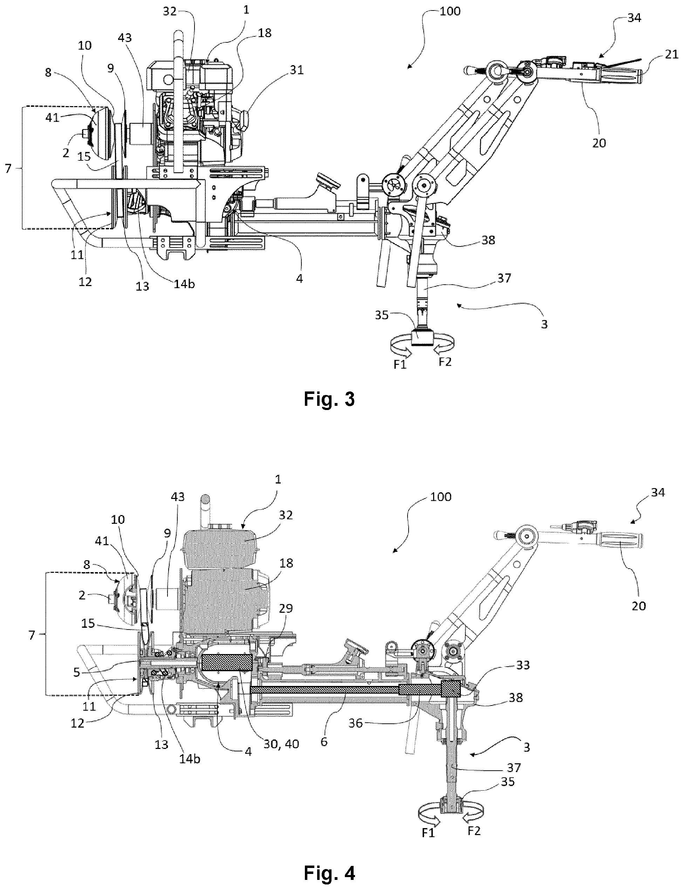

Par « sens opposés », tel qu'illustré sur les figures 3 à 5, il est entendu dire que le premier sens s1 de propagation du mouvement de rotation de l'arbre 2 d'entraînement se fait à partir du groupe 1 d'entraînement vers le mécanisme 7 de transmission, alors que le deuxième sens s2 correspond à la propagation du mouvement de rotation à partir du mécanisme 7 de transmission vers la tête 3 de tirefonnage pour entraîner l'embout 35 en rotation.

En particulier, le mécanisme 7 de transmission est couplé de préférence directement, d'une part, au groupe 1 d'entraînement, et, d'autre part, à la tête 3 de tirefonnage ou au moins à une partie de la tête 3 de tirefonnage afin d'assurer la rotation de l'embout 35 dans la configuration opérationnelle de la tirefonneuse 100. On définit ainsi le chemin de propagation du mouvement de rotation de l'arbre 2 d'entraînement depuis le groupe 1 d'entraînement jusqu'à l'embout 35. Le mécanisme 7 de transmission peut être vu comme l'ensemble des composants, par exemple mécaniques, par lesquels se propage le mouvement issu du groupe 1 d'entraînement vers l'embout 35. Un composant correspondant peut avoir une influence sur la manière dont le mouvement se propage, par exemple en le ralentissant ou en l'accélérant, en changeant le sens de rotation (selon que l'attache 101 soit à visser ou à dévisser).

Selon un mode de réalisation, au moins le groupe 1 d'entraînement est agencé à l'aplomb d'au moins une partie de l'arbre 5 mené, notamment dans la configuration opérationnelle où l'embout 35 est orienté vers le sol S. Cet agencement est particulièrement avantageux par rapport à l'encombrement longitudinal de la tirefonneuse 100 et permet une accessibilité aisée du groupe 1 d'entraînement, qui devient plus proche de l'opérateur du fait que la longueur totale de la tirefonneuse 100 est limitée.

Selon un mode de réalisation, le groupe 1 d'entraînement, le mécanisme 7 de transmission et l'arbre 5 mené sont agencés selon une architecture en C. Par exemple, en figures 1 à 5, la tirefonneuse 100 est telle que le groupe 1 d'entraînement, le mécanisme 7 de transmission et l'arbre 5 mené forment un C notamment ouvert en direction du poste 34 de commande ; cela permet par exemple de rapprocher le groupe 1 d'entraînement de l'opérateur qui peut plus aisément interagir avec le groupe 1 d'entraînement et par exemple :
- avec un lanceur 31 du groupe 1 d'entraînement permettant de lancer le moteur 18 du groupe 1 d'entraînement ;
- avec un réservoir 32 du groupe 1 d'entraînement pour le remplir de carburant si le moteur 18 est un moteur thermique alimenté en carburant par le réservoir 32.

Autrement dit, le groupe 1 d' entraînement peut être tourné de sorte que le lanceur 31 qu'il comprend soit orienté vers le, ou agencé du côté du, poste 34 de commande. Dans ce cas, l'arbre 2 d'entraînement et le lanceur 31 sont notamment agencés aux niveaux de côtés opposés du groupe 1 d'entraînement (voir notamment la figure 3).

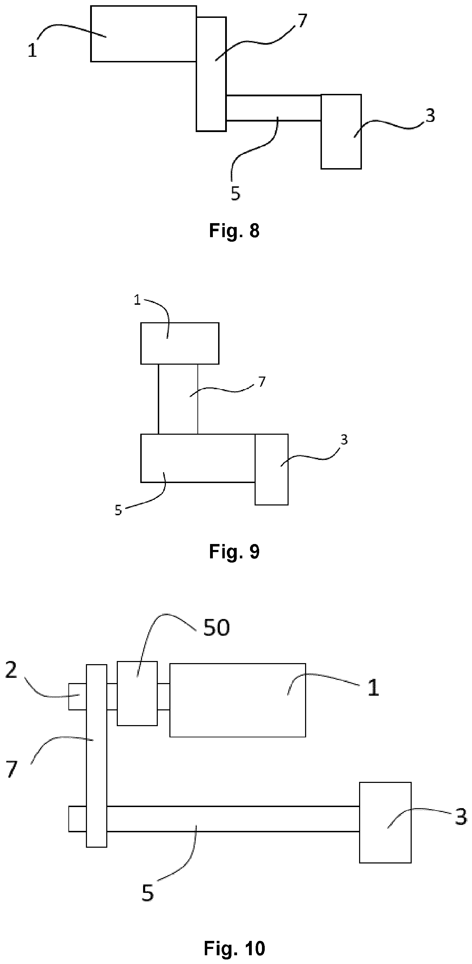

Selon d'autres modes de réalisation, le groupe 1 d'entraînement, le mécanisme 7 de transmission et l'arbre 5 mené peuvent être montés selon des architectures différentes dites en Z ou en L. Ces deux architectures en Z et en L de la tirefonneuse 100 sont illustrées sous la forme de schémas-blocs respectivement sur les figures 8 et 9. Les emplacements du groupe 1 d'entraînement et du mécanisme 7 de transmission varient selon l'architecture considérée.

Pour l'architecture en C, le groupe 1 d'entraînement peut être à l'aplomb de l'arbre 5 mené dans la configuration opérationnelle de la tirefonneuse 100 et le mécanisme 7 de transmission relie l'arbre 5 mené au groupe 1 d'entraînement. Cette architecture permet de limiter la longueur de la tirefonneuse 100 par exemple mesurée entre le mécanisme 7 de transmission et la tête 3 de tirefonnage, l'encombrement de la tirefonneuse 100 est ainsi limité

Pour l'architecture en Z, comme le montre la figure 8, l'emplacement du groupe 1 d'entraînement est tel que ce dernier forme une première extrémité de la tirefonneuse 100 opposée à une deuxième extrémité de la tirefonneuse 100 que forme la tête 3 de tirefonnage. On retrouve alors selon la longueur de la tirefonneuse 100 le groupe 1 d'entraînement, le mécanisme 7 de transmission, l'arbre 5 mené et la tête 3 de tirefonnage.

Pour l'architecture en L, comme le montre la figure 9, les emplacements du groupe 1 d'entraînement, du mécanisme 7 de transmission et de l'arbre 5 mené sont alignés selon une direction donnée par la hauteur dans la configuration opérationnelle. D'une manière générale, les architectures en Z et en L peuvent présenter des avantages en termes d'ingénierie vis-à-vis de l'ajustement du positionnement du groupe 1 d'entraînement et représentent des alternatives à l'architecture en C, qui reste l'architecture à privilégier car elle est très avantageuse par rapport à l'encombrement de la tirefonneuse 100.

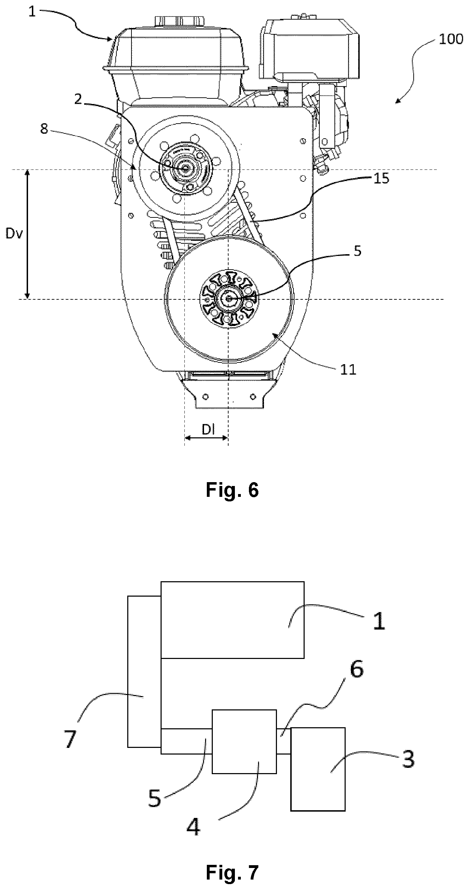

Comme il est possible de le voir sur les figures 5 et 6, l'axe de l'arbre 2 d'entraînement et l'axe de l'arbre 5 mené peuvent être sensiblement parallèles entre eux et, lorsque la tirefonneuse 100 est dans la configuration opérationnelle :
- l'axe de l'arbre 2 d'entraînement et l'axe de l'arbre 5 mené présentent entre eux un décalage de niveau selon une direction verticale Dv compris entre 10 mm et 400 mm, et préférentiellement entre 10 mm et 220 mm, et un décalage selon une direction latérale Dl strictement supérieur à 0 mm et inférieur ou égal à 400 mm, et préférentiellement inférieur ou égal à 220 mm ; ou
- l'axe de l'arbre 2 d'entraînement et l'axe de l'arbre 5 mené présentent entre eux un décalage de niveau selon une direction verticale Dv compris entre 10 mm et 400 mm, et l'un de l'arbre 2 d'entraînement et de l'arbre 5 mené est agencé à l'aplomb de l'autre de l'arbre 2 d'entraînement et de l'arbre 5 mené.

Le décalage vertical Dv et le décalage latéral Dl permettent de définir une position privilégiée de l'arbre 2 d'entraînement et (donc du groupe 1 d'entraînement) par rapport à celle de l'arbre 5 mené assurant l'équilibrage de la tirefonneuse 100, sa compacité et son fonctionnement optimal.

Par « décalage de niveau selon une direction verticale Dv », il est entendu la distance séparant deux plans horizontaux sensiblement parallèles, l'axe de l'arbre 5 mené étant inclus dans l'un des deux plans horizontaux et l'axe de l'arbre 2 d'entraînement étant inclus dans l'autre des deux plans horizontaux.

Comme il est possible de le voir sur les figures 1, 3, 4 et 5, le groupe 1 d'entraînement peut comprendre un carter 43 traversé par l'arbre 2 d'entraînement. Le carter 43 et le mécanisme 7 de transmission peuvent être en contact. Alternativement, selon une direction sensiblement parallèle à l'axe de l'arbre 2 d'entraînement, le carter 43 et le mécanisme 7 de transmission sont séparés d'une distance strictement supérieure à 0 mm et inférieure ou égale à 1000 mm, et préférentiellement inférieure ou égale à 500 mm. Autrement dit, le carter 43 peut comprendre un bord faisant face à un bord du mécanisme 7 de transmission, ces deux bords étant agencés selon ladite direction sensiblement parallèle à l'axe de l'arbre 2 d'entraînement et étant en contacts ou séparés de ladite distance.

Cela permet avantageusement d'indexer la position longitudinale du groupe 1 d'entraînement selon la longueur de la tirefonneuse 100, notamment pour faciliter son basculement pour coopérer avec une attache 101 correspondante et/ou faciliter les interactions d'un opérateur avec le groupe 1 d'entraînement.

La transmission, reliant le groupe 1 d'entraînement à l'embout 35, peut comprendre un mécanisme 30, 40 de réduction agencé entre l'arbre 5 mené et l'embout 35. Le mécanisme 30, 40 de réduction peut comprendre un arbre d'entrée formé par l'arbre 5 mené ou couplé, par exemple mécaniquement, à l'arbre 5 mené, et est couplé ou destiné à être couplé à un arbre 6 de sortie situé en aval du mécanisme 30, 40 de transmission sur le chemin de propagation évoqué ci-avant. Tel qu'illustré sur la figure 4, l'arbre 6 de sortie est en lien, ici mécanique, avec la tête 3 de tirefonnage pour entraîner l'embout 35 en rotation dans la configuration opérationnelle. Le but du mécanisme 30, 40 de réduction est de permettre de conditionner au moins en partie la vitesse de rotation de l'embout 35.

En outre, la tirefonneuse 100, et plus particulièrement la transmission, peut comprendre un inverseur 29 de sens de rotation de l'embout 35. Le mécanisme 30, 40 de réduction peut alors être associé à l'inverseur 29 configuré pour présenter sélectivement :
- un premier mode de fonctionnement dans lequel l'arbre 5 mené est couplé, par exemple mécaniquement, à l'arbre 6 de sortie pour entraîner l'embout 35 dans un premier sens F1 de rotation ;
- un deuxième mode de fonctionnement dans lequel l'arbre 5 mené est couplé, par exemple mécaniquement, à l'arbre 6 de sortie pour entraîner l'embout 35 dans un deuxième sens F2 de rotation opposé au premier sens F1 de rotation.

L'inverseur 29 de sens de rotation de l'embout 35 peut être commandé depuis un sélecteur, par exemple situé à l'une des poignées 20, 21 de commande de la tirefonneuse 100. Les poignées 20, 21 étant agencées chacune en extrémité d'un bras correspondant du poste 34 de commande, l'un des bras peut être mobile et forme ainsi le sélecteur de sorte que la position dudit bras puisse induire la commande adaptée de l'inverseur 29 de sens.

Par exemple, la transmission comprend un dispositif 4 de transmission comprenant l'inverseur 29 et le mécanisme 30, 40 de réduction par exemple agencés dans un même boîtier. L'arbre d'entrée du mécanisme 30, 40 de réduction peut former un arbre d'entrée du dispositif 4 de transmission (i.e. que l'arbre mené 5 peut former l'arbre d'entrée du dispositif 4 de transmission) et l'arbre 6 de sortie peut former la sortie du dispositif 4 de transmission. Notamment, en figure 4, dans la configuration opérationnelle, le groupe 1 d'entraînement est situé à l'aplomb du dispositif 4 de transmission.

Par exemple, dans le cadre de l'architecture en C de la figure 7, le groupe 1 d'entraînement est situé à l'aplomb du dispositif 4 de transmission. Dans ce cas, l'arbre 6 de sortie peut être relié à la tête 3 de tirefonnage.

Par exemple, dans la configuration opérationnelle de la tirefonneuse 100, le groupe 1 d'entraînement est positionné à un niveau de hauteur plus élevé que le niveau de hauteur du mécanisme 30, 40 de réduction par rapport au sol S. Cet agencement permet de limiter avantageusement l'encombrement longitudinal de la tirefonneuse 100 en étageant des parties de la tirefonneuse 100.

Selon un mode de réalisation, le groupe 1 d'entraînement est positionné à l'aplomb du mécanisme 30, 40 de réduction dans la configuration opérationnelle de la tirefonneuse 100.

Selon un mode de réalisation, le mécanisme 30, 40 de réduction est une boîte 40 à une unique vitesse. La boîte 40 est intégrée entre l'arbre 5 mené et l'arbre 6 de sortie de sorte que, dans le premier et le deuxième modes de fonctionnement évoqués ci-dessus, le couplage entre l'arbre 5 mené et l'arbre 6 de sortie se fasse au moins par l'intermédiaire du sélecteur 29 de sens et de tout ou partie de la boîte 40. Si le groupe 1 d'entraînement est assez puissant, la boîte 40 à une seule vitesse peut suffire pour l'utilisation de la tirefonneuse 100.

Selon un mode réalisation, la boîte 40 à une unique vitesse peut être placée dans la tête 3 de tirefonnage, par exemple pour limiter l'encombrement de la tirefonneuse 100.

Selon un mode de réalisation, le mécanisme 30, 40 de réduction est une boîte 30 de vitesses ayant au moins deux vitesses présentant des rapports de transmission différents. Par exemple, la boîte 30 de vitesses peut présenter un premier rapport de transmission et un deuxième rapport de transmission. La tirefonneuse 100 est configurée pour engager sélectivement, soit manuellement en utilisant un levier non visible soit automatiquement sur commande d'un actionneur par exemple agencé sur l'une des poignées 20, 21, le premier rapport ou le deuxième rapport de sorte à influer sur la vitesse de rotation de l'embout 35. L'utilisation de la boîte 30 de vitesses permet d'utiliser un groupe 1 d'entraînement moins puissant, permettant ainsi d'alléger la tirefonneuse 100.

Selon un mode réalisation, il est possible d'intégrer la boîte 30 de vitesses dans la tête 3 de tirefonnage, par exemple pour limiter l'encombrement de la tirefonneuse 100.

Selon un mode de réalisation, la tirefonneuse 100 comprend un carter 38 et la transmission, reliant le groupe 1 d'entraînement à l'embout 35, comprend un renvoi 33 d'angle agencé dans le carter 38, et un arbre 37 (notamment aussi appelé arbre de sortie de la tête 3 de tirefonnage) reliant le renvoi 33 d'angle à l'embout 35 agencé hors du carter 38, comme il est possible de le voir sur la vue en coupe de la tirefonneuse 100 en figure 4. Le renvoi 33 d'angle peut, le cas échéant, assurer une réduction, mais surtout permet de propager le mouvement de rotation à l'embout 35 orienté vers le sol S dans la configuration opérationnelle.

Le cas échéant, toute partie de la tête 3 de tirefonnage participant à la propagation du mouvement de rotation en amont de l'embout 35 sur le chemin de propagation fait partie de la transmission.

Le mécanisme 30, 40 de réduction peut être situé dans le carter 38 ; ou fixé sur le carter 38 ; ou situé à distance du carter 38 de sorte qu'au moins un arbre de transmission relie le mécanisme 30, 40 de réduction au renvoi 33 d'angle.

Lorsque le mécanisme 30, 40 de réduction est situé dans le carter 38, cela permet avantageusement de réduire les coûts en mutualisant les carters et les pièces, de réduire le poids de la tirefonneuse 100, de simplifier (ou encore réduire) les opérations de maintenance et d'améliorer le rendement de la tirefonneuse 100, le cas échéant, grâce à la diminution du nombre de composants, notamment mécaniques en mouvement. Pour les mêmes raisons, l'inverseur 29 peut aussi être logé dans le carter 38.

Ainsi, il résulte ce de qui a été décrit ci-avant que le groupe 1 d'entraînement peut être situé, dans la configuration opérationnelle, à l'aplomb du carter 38.

Selon un mode de réalisation tel qu'illustré sur la figure 4, la tête 3 de tirefonnage comprend un arbre 36 d'entrée permettant de relier le mécanisme 30, 40 de réduction au renvoi 33 d'angle, et est couplé, par exemple mécaniquement, à l'arbre 6 de sortie du mécanisme 30, 40 de réduction.

Selon un mode de réalisation, la tirefonneuse 100 comprend, comme représenté schématiquement en figure 10, un volant 50 d'inertie pour transmettre temporairement un couple à l'embout 35 ayant une valeur supérieure à la valeur d'un couple délivré par l'arbre 2 d'entraînement.

Le volant 50 d'inertie ne permet pas de répondre à une demande continue de couple mais permet d'obtenir un couple suffisant, lié à son inertie, pour passer un point dur.

Sur la figure 10, le volant 50 d'inertie est représenté, sur le chemin de propagation du mouvement entre le groupe 1 d'entraînement et le mécanisme 7 de transmission : à ce niveau le volant 50 d'inertie peut bénéficier d'une vitesse de rotation égale à la vitesse de rotation de l'arbre 2 d'entraînement. Cependant, selon les besoins de conception de la tirefonneuse 100, le volant 50 d'inertie peut être placé ailleurs sur le chemin de propagation du mouvement, par exemple en aval du mécanisme 7 de transmission (notamment après une éventuelle réduction du mouvement de rotation) ; dans ce cas, le volant 50 d'inertie peut être surdimensionné pour que sa masse, alors plus élevée, compense sa vitesse de rotation généralement plus faible à ce niveau que directement en sortie du groupe 1 d'entraînement en fonction du mécanisme 7 de transmission et/ou de la réduction. Selon une variante, le groupe 1 d'entraînement comprend le volant 50 d'inertie.

Selon un mode de réalisation, le mécanisme 7 de transmission comprend, ou est, une transmission à variation continue. La transmission à variation continue, comme illustrée de manière plus détaillée et à titre d'exemple en figures 1 à 5, est couplée (par exemple mécaniquement), d'une part, à l'arbre 2 d'entraînement (notamment par couplage direct ou via un arbre intermédiaire que comprend le mécanisme 7 de transmission) et, d'autre part, à l'arbre 5 mené (notamment par couplage direct) pour assurer, dans la configuration opérationnelle, l'adaptation automatique de la vitesse de rotation de l'embout 35. Bien entendu, dans la configuration opérationnelle, l'arbre 5 mené est couplé, par exemple mécaniquement, à la tête 3 de tirefonnage et plus particulièrement à l'embout 35. Il en résulte ainsi une adaptation automatique de la vitesse de rotation de la tête 3 de tirefonnage en fonction de la résistance qu'oppose l'attache 101 à l'embout 35 de la tête 3 de tirefonnage au cours du vissage ou du dévissage de l'attache 101, ce qui facilite le passage d'un éventuel point dur. Autrement dit, dans la configuration opérationnelle de la tirefonneuse 100, la transmission à variation continue assure l'adaptation automatique de la vitesse de rotation de l'embout 35 en variant continûment le rapport de démultiplication/transmission de l'arbre 2 d'entraînement à l'arbre 5 mené.

La transmission à variation continue est aussi connue sous la dénomination CVT qui est le signe de « Continuously Variable Transmission » en langue anglaise.

De préférence, la transmission à variation continue est agencée à la sortie du groupe 1 d'entraînement (i.e. la transmission à variation continue est directement couplée à l'arbre 2 d'entraînement ou à un arbre intermédiaire situé dans le prolongement de l'arbre 2 d'entraînement) pour avoir un maximum d'effort centrifuge (et donc un maximum de vitesse), ce qui permet de maximiser le fonctionnement de la transmission à variation continue. La transmission à variation continue évite notamment le recours à un volant d'inertie tel que décrit ci-avant.

Une réalisation particulière du mécanisme 7 de transmission formant la transmission à variation continue est visible sur les figures 1 à 5. Selon cette réalisation la transmission à variation continue comprend une poulie 8 motrice, une poulie 11 menée, un premier organe 14a de rappel, un deuxième organe de 14b de rappel et une courroie 15 reliant la poulie 8 motrice et la poulie 11 menée. La poulie 8 motrice est montée sur l'arbre 2 d'entraînement et comprend un premier flasque 9 fixe par rapport à l'arbre 2 d'entraînement et un deuxième flasque 10 mobile en translation le long de l'arbre 2 d'entraînement. La poulie 11 menée est montée sur l'arbre 5 mené et comprend un troisième flasque 12 fixe par rapport à l'arbre 5 mené et un quatrième flasque 13 mobile en translation le long de l'arbre 5 mené. Le premier organe 14a de rappel sollicite constamment le deuxième flasque 10 dans une direction opposée au premier flasque 9, tendant ainsi à écarter le deuxième flasque 10 du premier flasque 9 ; et le deuxième organe 14b de rappel sollicite constamment le quatrième flasque 13 en direction du troisième flasque 12, tendant ainsi à rapprocher le quatrième flasque 13 du troisième flasque 12.

Une telle transmission à variation continue dite mécanique selon cet agencement présente les avantages suivants, notamment en comparaison avec une transmission hydraulique : la limitation du coût de fabrication de la tirefonneuse 100, la simplicité d'entretien de la tirefonneuse 100, la propreté de la tirefonneuse 100, ainsi que la légèreté de la tirefonneuse 100. En outre, grâce à cet agencement architectural, l'encombrement de la tirefonneuse 100 est réduit ce qui en facilite l'utilisation par un opérateur.

Le premier organe 14a de rappel et le deuxième organe 14b de rappel peuvent être un ressort de compression ou bien tout type d'organe de rappel piloté via un actionneur.

La fonction du premier organe 14a de rappel est schématisée en figure 5, le premier organe 14a de rappel pouvant être en réalité logé dans un dôme 41 de la poulie 8 motrice.

La courroie 15 peut être en un matériau souple comme par exemple en caoutchouc ou en polymères synthétiques. Le rôle de la courroie 15 est de transmettre le mouvement de la poulie 8 motrice à la poulie 11 menée en les reliant ensemble lorsque l'arbre 2 d'entraînement tourne selon son axe.

La transmission à variation continue est avantageusement configurée pour permettre, notamment dans la configuration opérationnelle, une variation de rapport de rapport de transmission en fonction d'une variation du régime moteur du groupe 1 d'entraînement et/ou d'un couple résistant de l'arbre 5 mené. En effet, dans la configuration opérationnelle de la tirefonneuse 100, tant lors du vissage que du dévissage de l'attache 101, un point dur, lié au couple résistant provoqué par la coopération de l'embout 35 avec l'attache 101 et se propageant de l'embout 35 à l'arbre 5 mené, peut apparaître. Pour vaincre ce couple résistant (et donc passer le point dur), il est classique d'augmenter le couple moteur du groupe 1 d'entraînement. Cependant, une grande augmentation du couple peut mener à la baisse du régime moteur du groupe 1 d'entraînement, d'où la nécessité de maintenir la puissance du groupe 1 d'entraînement (proportionnelle au couple moteur et à la vitesse de rotation) à une valeur sensiblement constante : ce que permet la transmission à variation continue.

La transmission à variation continue décrite ci-dessus n'est pas limitative dans le sens où sa description vaut pour un mode de réalisation particulier et préféré de la tirefonneuse 100. Certaines transmissions à variation continue peuvent être plus petite et compactes, sont plus simples dans leur fonctionnement. Ces systèmes simplifiés sont simplement pilotés par la variation du régime moteur (le moteur 18 va ralentir en cas de pic de couple). Qui plus est, certaines transmissions à variation continue ne permettent pas à la courroie 15 d'être libre lorsque que le régime moteur est faible ; ces systèmes doivent être couplés avec un embrayage centrifuge.

Il a été décrit ci-avant un exemple de réalisation particulier du mécanisme 7 de transmission en utilisant de transmission à variation continue à courroie et notamment commandée de manière interne via des premier et deuxième organes de rappel de type ressort. Alternativement, le mécanisme 7 de transmission peut être choisie parmi :
- une transmission à variation continue à courroie avec pilotage externe (en utilisant un actionneur pneumatique, électrique ou hydraulique par exemple) ;
- une transmission à variation continue hydraulique (le couplage de l'arbre 2 d'entraînement à l'arbre 5 mené est alors hydraulique) par exemple avec un visco-coupleur ou un convertisseur de couple ;
- une transmission à variation continue mécanique (le couplage de l'arbre 2 d'entraînement à l'arbre 5 mené est alors mécanique) par exemple toroïdale, conique, ou par train épicycloïdale.

Dans l'exemple de réalisation de la tirefonneuse 100, représenté sur les figures 1 à 5, l'inverseur 29 permet de choisir le sens de rotation de l'embout 35 de la tête 3 de tirefonnage en aval de la transmission à variation continue selon le sens de propagation du mouvement de rotation entre le groupe 1 d'entraînement et la tête 3 de tirefonnage. Ce positionnement spécifique permet d'éviter les à-coups liés à l'inversion du sens de rotation et de rendre ainsi le système plus fluide.

Avantageusement, en combinant la transmission à variation continue avec une boîte 30 de vitesses à deux rapports de transmission, cela permet d'augmenter la diversité de choix des moteurs utilisables. Il sera alors possible de réduire la puissance du moteur 18 du groupe 1 d'entraînement en vue d'alléger la tirefonneuse 100 ; cela permet également de réduire les coûts de la motorisation et la consommation énergétique (essence électricité ou autre).

Lorsque le moteur 18 est un moteur électrique ou hydraulique, ce dernier peut directement inverser son sens de rotation. Dès lors, l'inverseur 29 évoqué ci-avant n'est plus nécessaire et n'est donc pas présent au sein de la tirefonneuse 100 en aval du moteur 18 selon le chemin de propagation du mouvement. Dans ce cas, la transmission à variation continue sera adaptée pour fonctionner quel que soit le sens de rotation de l'arbre 2 d'entraînement.

Selon d'autres modes de réalisation, le mécanisme 7 de transmission peut être également, par exemple, un train d'engrenage, une chaîne, ou tout type de transmission permettant de propager le mouvement rotation de l'arbre 2 d'entraînement au sein de la transmission et en direction de l'embout 35.

Les modes de réalisation décrits ci-avant peuvent, le cas échéant, être combinés.

La présente invention trouve une application industrielle dans le domaine des voies ferrées, notamment en permettant à un opérateur d'accélérer le vissage ou le dévissage d'attache(s) 101.

## Revendications

1. Tirefonneuse (100) comprenant :
• un embout (35) apte à être mis en rotation en vue de visser ou de dévisser une attache (101) de voie (102) ferrée ;
• un groupe (1) d'entraînement comprenant un arbre (2) d'entraînement agencé en sortie du groupe (1) d'entraînement ;
• une transmission reliant le groupe (1) d'entraînement à l'embout (35) et configurée pour propager, dans une configuration opérationnelle de la tirefonneuse (100), un mouvement de rotation de l'arbre (2) d'entraînement afin d'entraîner l'embout (35) en rotation ;
la transmission comprenant successivement depuis le groupe (1) d'entraînement :
• un mécanisme (7) de transmission ;
• un arbre (5) mené couplé à l'arbre (2) d'entraînement par l'intermédiaire du mécanisme (7) de transmission ;
l'arbre (2) d'entraînement étant décalé par rapport à l'arbre (5) mené.

2. Tirefonneuse (100) selon la revendication 1, dans laquelle l'arbre (2) d'entraînement comprend une portion (2a) qui s'étend dans une première direction selon un premier sens (s1) en sortie du groupe (1) d'entraînement vers le mécanisme (7) de transmission et dans laquelle l'arbre (5) mené comprend une portion (5a) qui s'étend dans une deuxième direction selon un deuxième sens (s2) orienté vers l'embout (35) le long d'un chemin de propagation du mouvement de rotation de l'arbre (2) d'entraînement au sein de la transmission, le premier sens (s1) et le deuxième sens (s2) étant opposés.

3. Tirefonneuse (100) selon l'une quelconque des revendications 1 à 2, dans laquelle le groupe (1) d'entraînement est agencé à l'aplomb d'au moins une partie de l'arbre (5) mené.

4. Tirefonneuse (100) selon l'une quelconque des revendications 1 à 3, dans laquelle le groupe (1) d'entraînement, le mécanisme (7) de transmission et l'arbre (5) mené sont agencés selon une architecture en C.

5. Tirefonneuse (100) selon l'une quelconque des revendications 1 à 4, dans laquelle l'axe de l'arbre (2) d'entraînement et l'axe de l'arbre (5) mené sont sensiblement parallèles entre eux et dans laquelle, lorsque la tirefonneuse (100) est dans la configuration opérationnelle :
• l'axe de l'arbre (2) d'entraînement et l'axe de l'arbre (5) mené présentent entre eux un décalage de niveau selon une direction verticale (Dv) compris entre 10 mm et 400 mm, et préférentiellement entre 10 mm et 220 mm, et un décalage selon une direction latérale (Dl) strictement supérieur à 0 mm et inférieur ou égal à 400 mm, et préférentiellement inférieur ou égal à 220 mm ; ou
• l'axe de l'arbre (2) d'entraînement et l'axe de l'arbre (5) mené présentent entre eux un décalage de niveau selon une direction verticale (Dv) compris entre 10 mm et 400 mm, et l'un de l'arbre (2) d'entraînement et de l'arbre (5) mené est agencé à l'aplomb de l'autre de l'arbre (2) d'entraînement et de l'arbre (5) mené.

6. Tirefonneuse (100) selon l'une quelconque des revendication 1 à 5, dans laquelle le groupe (1) d'entraînement comprend un carter (43) traversé par l'arbre (2) d'entraînement et dans laquelle :
• le carter (43) et le mécanisme (7) de transmission sont en contact ; ou
• selon une direction sensiblement parallèle à l'axe de l'arbre (2) d'entraînement, le carter (43) et le mécanisme (7) de transmission sont séparés d'une distance strictement supérieure à 0 mm et inférieure ou égale à 1000 mm, et préférentiellement inférieure ou égale à 500 mm.

7. Tirefonneuse (100) selon l'une quelconque des revendications 1 à 6, dans laquelle la transmission comprend un mécanisme (30, 40) de réduction agencé entre l'arbre (5) mené et l'embout (35).

8. Tirefonneuse (100) selon la revendication 7, dans laquelle, dans la configuration opérationnelle de la tirefonneuse (100), le groupe (1) d'entraînement est positionné à un niveau de hauteur plus élevé que le niveau de hauteur du mécanisme (30, 40) de réduction par rapport au sol (S).

9. Tirefonneuse (100) selon l'une quelconque des revendications 7 à 8, dans laquelle le mécanisme (30, 40) de réduction est une boîte (40) à une unique vitesse.

10. Tirefonneuse (100) selon l'une quelconque des revendications 7 à 8, dans laquelle le mécanisme (30, 40) de réduction est une boîte (30) de vitesses ayant au moins deux vitesses présentant des rapports de transmission différents.

11. Tirefonneuse (100) selon l'une quelconque des revendications 1 à 10, dans laquelle la tirefonneuse (100) comprend un carter (38) et dans laquelle la transmission comprend :
• un renvoi (33) d'angle agencé dans le carter (38) ;
• un arbre (37) reliant le renvoi (33) d'angle à l'embout (35) agencé hors du carter (38).

12. Tirefonneuse (100) selon la revendication 11, dans laquelle le mécanisme (30,40) de réduction est :
• situé dans le carter (38) ; ou
• fixé sur le carter (38) ; ou
• situé à distance du carter (38) de sorte qu'au moins un arbre de transmission relie le mécanisme (30, 40) de réduction au renvoi (33) d'angle.

13. Tirefonneuse (100) selon l'une quelconque des revendications 1 à 12, dans laquelle le mécanisme (7) de transmission comprend une transmission à variation continue.
